# EUROPÄISCHE PATENTSCHRIFT

(11) **EP 1 337 341 B1**
(45) Veröffentlichungstag und Bekanntmachung des Hinweises auf die Patenterteilung: **28.02.2007**
(21) Anmeldenummer: 01967328.4
(22) Anmeldetag: 11.09.2001
(51) Int. Cl.: B03B 9/06, B07B 9/00, C22B 7/00, B29B 17/02

(54) **ANLAGE UND VERFAHREN ZUR AUFBEREITUNG VON SHREDDER-RÜCKSTÄNDEN**
UNIT AND METHOD FOR THE TREATMENT OF SHREDDER RESIDUES
INSTALLATION ET PROCEDE POUR TRAITER DES RESIDUS DE DECHIQUETAGE

(30) Priorität: 27.10.2000 DE 10053487
(43) Veröffentlichungstag der Anmeldung: 27.08.2003
(73) Patentinhaber: Volkswagen Aktiengesellschaft, 38436 Wolfsburg (DE)
(72) Erfinder: GOLDMANN, Daniel, 38640 Goslar (DE); DUNNEN, Bramden, 38106 Braunschweig (DE); KNUST, Michael, 38550 Isenbüttel (DE)
(86) Internationale Anmeldenummer: PCT/EP2001/010460
(87) Internationale Veröffentlichungsnummer: WO 2002/034401

(56) Entgegenhaltungen:
- EP-A- 0 884 107
- WO-A-00/53324
- WO-A-98/01276
- DE-A- 4 205 309
- DE-A- 19 755 629
- RUDOLPH K-U ET AL: "STAND DER BEHANDLUNG UND VERWERTUNG VON SHREDDERRUECKSTAENDEN AUS ALTAUTOS" MUELL UND ABFALL, SCHMIDT VERLAG, BERLIN, DE, Bd. 29, Nr. 12, 1. Dezember 1997 (1997-12-01), Seiten 745-755, XP000730441 ISSN: 0027-2957

## Beschreibung

Die Erfindung betrifft ein Verfahren zur Aufbereitung von Shredder-Rückständen metallhaltiger Abfälle, zum Zwecke der Erzeugung werkstofflich, rohstofflich und energetisch verwertbarer Fraktionen, mit den im Oberbegriff des Anspruchs 1 genannten Merkmalen sowie eine Anlage mit den im Oberbegriff des Anspruchs 21 genannten Merkmalen, mit der die Aufbereitung der Shredder-Rückstände durchgeführt werden kann.

Das Shreddem von Altfahrzeugen zum Materialaufschluss ist seit langem bekannt. Bei der Durchführung des Shredder-Prozesses haben sich Verfahrensführungen etabliert, bei denen das anfallende Stoffgemisch in verschiedene Fraktionen aufgeteilt wird. So wird zunächst mittels einer geeigneten Absaugvorrichtung eine sogenannte Shredder-Leichtfraktion (SLF) vom anfallenden Stoffgemisch abgetrennt. Die verbleibende Fraktion wird anschließend mit einem Permanent-Magnetscheider in eine ferromagnetische Fraktion (Shredder-Schrott (SS)) und eine nicht-ferromagnetische Fraktion (Shredder-Schwerfraktion (SSF)) aufgetrennt. Der Anteil der metallurgisch vollständig verwertbaren Shredder-Schrott-Fraktion liegt häufig bei zirka 50 bis 75 Gew.%. Die Shredder-Leichtfraktion wurde nach bisherigen Konzepten in der Regel als Abfall deponiert oder in Müllverbrennungsanlagen verbrannt. Sie ist dadurch gekennzeichnet, dass sie sowohl einen hohen Organik- als auch einen hohen Feinkornanteil enthält. Die schwere, nichtflugfähige sowie nicht-ferromagnetische Fraktion - also die Shredder-Schwerfraktion - zeichnet sich durch einen hohen Anteil an Nicht-Eisenmetallen (NE-Metalle) aus. Zur Wiedergewinnung der verschiedenen NE-Metalle sind spezielle Aufbereitungsanlagen entwickelt worden, bei denen allerdings der verbleibende Rest aus organischen und anorganischen, nicht-metallischen Komponenten in der Regel als Abfall deponiert wird. Unter Shredder-Rückständen sollen nachfolgend alle Stoffströme aus dem Shredderprozess verstanden werden, die nicht direkt am Shredder als metallurgisch direkt verwertbare Produkte abgezogen (Shredder-Schrott) werden können.

Aus der DE 44 37 852 A1 ist ein Verfahren bekannt, bei dem die Shredder-Leichtfraktion, insbesondere zwecks Entfemen von "unerwünschten Bestandteilen", insbesondere Kupfer und Glas, aufbereitet wird. Dabei werden die Shredder-Rückstände in einem Zwangsmischer homogenisiert und mit einem fein- bis feinstkörnigen, eine magnetisierbare Komponente enthaltenen Material vermischt sowie das resultierende Gemisch über einen Magnetscheider geführt. Es hat sich dabei gezeigt, dass die eine metallurgische Verwendung behindernden metallischen Bestandteile der Shredder-Leichtfraktion auf diese Weise abgetrennt werden können.

In der EP 0 863 114 A1 ist vorgesehen, einen dauerplastischen Bergbauversatzstoff zu schaffen, indem der Shredder-Leichtfraktion eine Bindemittelkomponente, ein Füllstoff und eine Salzlösung zugesetzt werden. Dadurch soll ein druckfester, dauerplastischer Körper geschaffen werden.

Aus der DE 197 42 214 C2 ist bekannt, die Shredder-Leichtfraktion weiter zu zerkleinern und einer thermischen Behandlung zu unterziehen. Während oder nach der Zerkleinerung sollen dabei metallische Bestandteile aussortiert werden und das verbleibende Stoffgemisch in einem Schmelzreaktor geschmolzen und durch Abkühlung zu einem "ungefährlichen" Feststoff umgewandelt werden.

Weiterhin offenbart die EP 0 922 749 A1 ein Verfahren zur Aufarbeitung der Shredder-Leichtfraktion, bei dem die Shredder-Leichtfraktion in einen Wirbelschichtvergaser und unter Einbringung von Kalziumkarbonat kalziniert wird.

In einem weiteren thermischen Verfahren sieht die DE 197 31 874 C1 vor, dass die Shredder-Leichtfraktion in einer weiteren Stufe erneut verpresst und dann zerkleinert, homogenisiert und im Wassergehalt reduziert wird, um in einer nachfolgenden Stufe thermisch verwertet zu werden.

In der EP 0 884 107 A2 ist vorgesehen, die Shredder-Leichtfraktion mittels Zerkleinerung, Klassierung und Sortierung in eine metallfreie Fraktion mit einer Zerkleinerungsstufe ≤ 20 mm zu überführen. Die Aufbereitung der Shredder-Leichtfraktion soll zu einer thermisch verwertbaren Fraktion führen.

Weiterhin befasst sich die DE 197 55 629 A1 mit der Aufbereitung einer Shredder-Leichtfraktion in verschiedene Fraktionen, wie Shreddersand, Shreddergranulat, Shredderflusen und Metallgranulat.

Neben den aufgezeigten Verwertungsverfahren ist es bekannt, die Shredder-Leichtfraktion einer Vorbehandlung zu unterziehen, bei der ferromagnetische Restfraktionen aus Eisen, V2A-Stahl und Aluminium abgetrennt werden. Ähnliche Verfahren sind auch bei der Aufbereitung der Shredder-Schwerfraktion zum Einsatz gekommen. Darüber hinaus ist es bekannt, von dieser Fraktion Polyolefine abzutrennen.

Den aufgezeigten Verfahren ist gemeinsam, dass sie jeweils nur zur Verarbeitung der Shredder-Leicht- oder Shredder-Schwerfraktion ausgelegt sind. Eine gemeinsame Verarbeitung ist nicht vorgesehen. Darüber hinaus sind die aufgezeigten Verfahren unter dem Aspekt der Maximierung des Nutzungsgrades in der Reihenfolge werkstofflicher, rohstofflicher und energetischer Nutzung nicht tauglich. Vor dem Hintergrund steigender gesetzlicher Anforderungen (EU-Altautorichtlinie, EU-Verbrennungsrichtlinie und andere) und auch steigender Deponiekosten und Anforderungen an das zu deponierende Gut, ist eine erhöhte Verwertungsquote wünschenswert. So sieht die Altautoverordnung vom 1. April 1998 vor, dass ab dem Jahre 2015 über 95 Vol.% eines Altautos verwertet werden müssen. Verschärfte Anforderungen aus der im September 2000 verabschiedeten EU-Altautorichtlinie schreiben darüber hinaus vor, den Anteil werkstoff- und rohstofflich nutzbarer Stoffströme auf mindestens 85 % zu steigern. Eine Verwertung schließt demnach eine bloße energetische Nutzung, zum Beispiel in Müllverbrennungsanlagen, aus.

Zusätzlich wird in der WO 00/53324 eine Anlage und ein Verfahren für die Verwertung von Shredderabfällen vorgeschlagen, deren Kern der Einsatz einer Rotorprallmühle ist, in welcher sowohl die Shredder-Schwerabfälle als auch die Shredder-Leichtabfälle zerkleinert werden. Um in einer einstufigen Hauptzerkleinerung einen ausreichenden Aufschluss aller Bestandteile zu erreichen, ist eine massive Krafteinwirkung auf die Partikel notwendig. Hierdurch kann es zu einer eigentlich ungewollten Imprägnation oder einem Einpressen etwa von duktilen Kupferlitzen in Hartkunststoffpartikeln kommen. Passiert dies, lassen sich keine metallarmen Kunststoff-Fraktionen mehr gewinnen. Des Weiteren zielt das Verfahren im Wesentlichen nur darauf ab, dass die Shredderabfälle in Metallbestandteile, eine Deponiefracht und eine heizwertreiche Verbrennungsfracht aufgetrennt werden.

Der Erfindung liegt daher die Aufgabe zugrunde, ein Verfahren und die dazu notwendige Anlage zur Verfügung zu stellen, mit denen die Shredder-Rückstände gemeinschaftlich verarbeitet und in einem mechanischen Aufbereitungsprozess in werkstofflich, rohstofflich und energetisch nutzbare Endprodukte aufgetrennt werden. Durch die gemeinschaftliche Verarbeitung soll insbesondere erreicht werden, dass der Anteil der nicht verwertbaren Fraktion auf unter 5 % des Gesamtaltfahrzeuggewichts reduziert und der Anteil werkstofflich oder rohstofflich nutzbarer Endprodukte erhöht wird.

Erfindungsgemäß wird diese Aufgabe durch ein Verfahren zur Aufbereitung von Shredder-Rückständen metallhaltiger Abfälle, insbesondere von Fahrzeugkarossen, mit den im Anspruch 1 genannten Merkmalen sowie eine Anlage zur Aufbereitung der Shredder-Rückstände mit den im Anspruch 21 genannten Merkmalen gelöst. Das Verfahren zeichnet sich dadurch aus, dass die während der Aufbereitung der Shredder-Leichtfraktion und der Shredder-Schwerfraktion in Vorprozessen entstehenden primären Stoffströme zumindest in Teilen einem gemeinsamen Hauptprozess zur abschließenden Aufarbeitung zugeführt werden. Als Endprodukte werden mindestens eine ferromagnetische Fraktion, eine Nicht-Eisenmetall-haltige Fraktion, eine Granulat-Fraktion, eine Flusen-Fraktion und eine Sand-Fraktion erzeugt. Die bereitgestellten Endprodukte können entweder direkt einer Verwertung zugeführt werden oder gegebenenfalls in weiteren Veredlungsschritten zu verwertbaren Produkten hoher Qualität weiterverarbeitet werden.
Aus der Shredder-Leichtfraktion werden vorzugsweise in einer Vorbehandlung aufgeschlossene Fe-, V2A- und Al-Anteile abgetrennt. Vorzugsweise wird diese Shredder-Leichtfraktion
- in einem ersten Zerkleinerungsaggregat aufgeschlossen,
- anschließend mittels wenigstens eines Magnetscheiders in mindestens eine ferromagnetische Fraktion und eine nicht-ferromagnetische Fraktion aufgetrennt,
- in einem zweiten Zerkleinerungsaggregat die nicht-ferromagnetische Fraktion aufgeschlossen,
- von dieser Fraktion mittels wenigstens einer Klassiereinrichtung eine feinkörnige Sand-Fraktion abgetrennt und
- die verbleibende Fraktion in wenigstens einer Dichtetrennungseinrichturig in eine Flusen-Fraktion und eine grobkörnige Schwergut-Fraktion aufgetrennt.

Durch die aufgezeigte Vorgehensweise mit dem stufenweisen Aufschluss der Shredder-Leichtfraktion und den zwischengeschalteten Verfahrensschritten zur Trennung der besonders abrasiv wirkenden ferromagnetischen Bestandteile, können die Betriebskosten insbesondere beim zweiten Zerkleinerungsaggregat gering gehalten werden. Zudem können bereits in diesem Punkt der Gesamtprozessführung zur Aufbereitung der Shredder-Rückstände die gewünschten Endprodukte Flusen und Sand abgetrennt werden. Eine weitere bevorzugte Ausführung sieht vor, dass im Vorprozess mittels einer Absaugeinrichtung zusätzlich eine Schaumstoff-Fraktion - im Wesentlichen aus Polyurethan bestehend - abgetrennt wird.

Vorzugsweise wird dem ersten als auch dem zweiten Zerkleinerungsaggregat jeweils eine Klassiereinrichtung zur Separation und Zuführung einer gesiebten Fraktion vorgeschaltet. Durchmesser der eingehenden Fraktion sowie ein Austrag der Zerkleinerungsaggregate werden selbstverständlich aufeinander abgestimmt. Insgesamt kann auf diese Weise ein Verschleiß in den Zerkleinerungsaggregaten verringert werden.

Weiterhin wird die Shredder-Schwerfraktion im Vorprozess vorzugsweise durch wenigstens einen Metallabscheider und wenigstens eine Klassiereinrichtung in wenigstens eine angereicherte, Nicht-Eisenmetall-haltige Fraktion, eine Schwergut-Fraktion und eine feinkörnige, metallarme Sand-Fraktion getrennt. Zusätzlich ist es denkbar, dass von der Schwergut-Fraktion in wenigstens einer Dichtetrennungseinrichtung eine hochdichte Restfraktion abgetrennt wird. Die Auftrennung der Shredder-Schwerfraktion in verschiedene Stoffströme wird unter dem Gesichtspunkt der gemeinschaftlichen Verarbeitung mit den zuvor bei den im Vorprozess der Verarbeitung der Shredder-Leichtfraktion entstehenden Stoffströmen vorgenommen.

Im Hauptprozess werden die Stoffströme aus den Vorprozessen vorzugsweise derart zusammengeführt, dass
- die Sand-Fraktionen zu einer gemeinsamen Sand-Fraktion zusammengefasst werden und
- die Schwergut-Fraktionen zu einer gemeinsamen Schwergut-Fraktion zusammengefasst, mittels eines Zerkleinerungsaggregates aufgeschlossen und über eine Dichtetrennungseinrichtung in die Granulat-Fraktion und in eine angereicherte, Nicht-Eisenmetall-haltige Fraktion aufgetrennt werden.

In diesem Prozessteilschritt fallen demnach die gewünschten Endprodukte Sand, Granulat und die Nicht-Eisenmetall-haltige Fraktion an. Die Nicht-Eisenmetall-haltigen Fraktionen können dann vorzugsweise in einem gemeinsamen Aufbereitungsschritt mittels geeigneter Verfahrensschritte, zum Beispiel einer Sandflotation und einer optischen Sortierung, zur Abtrennung von Leichtmetall-, Buntmetall- und sonstigen Metall-Fraktionen unterzogen werden. Die bei der Abtrennung anfallenden nicht-metallischen Restfraktionen können je nach Menge und Zusammensetzung an geeigneten Stellen in den Hauptprozess und/oder die Vorprozesse wieder eingespeist werden.

Weitere bevorzugte Ausgestaltungen des Verfahrens ergeben sich aus den übrigen verfahrensabhängigen Unteransprüchen.

Bevorzugte Ausführungsformen der erfindungsgemäßen Anlage ergeben sich aus den abhängigen Ansprüchen 18 bis 29. Hinsichtlich der Vorteile der erfindungsgemäßen Anlage sei insbesondere auf die obigen Ausführungen, das erfindungsgemäße Verfahren betreffend, verwiesen.

Die Erfindung wird nachfolgend in einem Ausführungsbeispiel anhand der zugehörigen Zeichnungen näher erläutert. Es zeigen:
- Figur 1: eine Übersicht über die im Prozess der Aufbereitung der Shredder-Rückstände zu bestimmten Zeitpunkten entstehenden Endprodukte in einem Fließdiagramm und
- Figur 2: ein schematisches Fließdiagramm für die Prozessführung in den Vorprozessen und im Hauptprozess der Aufbereitung.

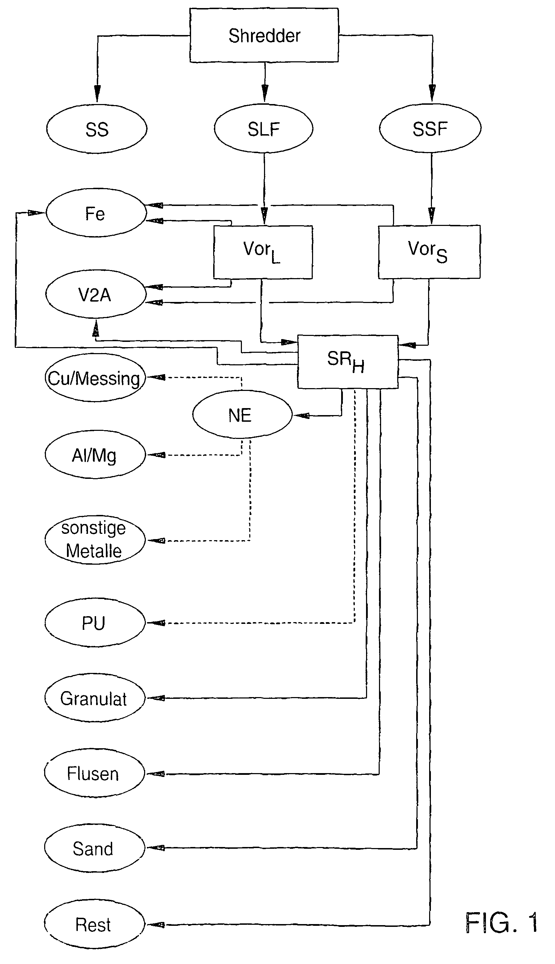

Die Figur 1 zeigt in einem Fließdiagramm, zu welchen Zeitpunkten Endprodukte nach dem erfindungsgemäßen Verfahren während der Aufbereitung der Shredder-Rückstände anfallen. Zunächst werden in einem an sich bekannten vorgeschalteten Shredderprozess in einem Shredder metallhaltige Abfälle, insbesondere von Fahrzeugkarossen, durch einen Zerkleinerungsprozess aufgeschlossen. Im Nachgang erfolgt eine Abtrennung einer flugfähigen Leichtfraktion durch eine Absaugvorrichtung (Shredder-Leichtfraktion SLF). Der nach der Absaugung verbleibende schwere, nicht-flugfähige Stoffstrom wird auf einem Permanent-Magnetscheider in eine ferromagnetische und eine nicht-ferromagnetische Fraktion getrennt. Die ferromagnetische Fraktion wird als Shredder-Schrott SS bezeichnet und stellt das primäre, direkt in der Metallurgie einsetzbare Produkt des Shredders dar. Die schwere, nicht-flugfähige sowie nicht-ferromagnetische Fraktion wird als Shredder-Schwerfraktion SSF bezeichnet. In einem weiteren, hier nicht dargestellten Vorbehandlungsschritt können von der Shredder-Leichtfraktion SLF mittels eines Magnetscheiders noch vorhandene ferromagnetische Bestandteile abgetrennt werden. Der dann verbleibende Stoffstrom der Shredder-Leichtfraktion SLF sowie die Shredder-Schwerfraktion SSF werden nun gemeinschaftlich als Shredder-Rückstände in die gewünschten Endprodukte aufgetrennt.

Die Prozessführung sieht dazu einen Vorprozess Vor_{L} für die Shredder-Leichtfraktion SLF, einen Vorprozess Vorₛ für die Shredder-Schwerfraktion SSF und einen gemeinsamen Hauptprozess SR_{H} zur abschließenden Aufarbeitung zumindest eines Teiles der in den Vorprozessen Vor_{L}, Vor_{S} entstehenden primären Stoffströme vor. Als Endprodukte gemäß dem Ausführungsbeispiel entstehen Fraktionen, die überwiegend und mit möglichst hoher Reinheit aus Eisen Fe, Stahl V2A, Flusen, Sand, Granulat, Schaumstoff PU und einem zu beseitigenden Rest bestehen. Weiterhin kann eine Nicht-Eisenmetall-haltige Fraktion NE abgetrennt werden, die durch entsprechende Prozessführung wiederum eine Aufteilung in Fraktionen mit Buntmetallen Cu/Messing, Leichtmetallen Al/Mg und sonstige Metalle ermöglicht. Die entstehenden Endprodukte können bis auf die Restfraktion einer metallurgischen, werkstofflichen, rohstofflichen oder energetischen Verwertung zugeführt werden.

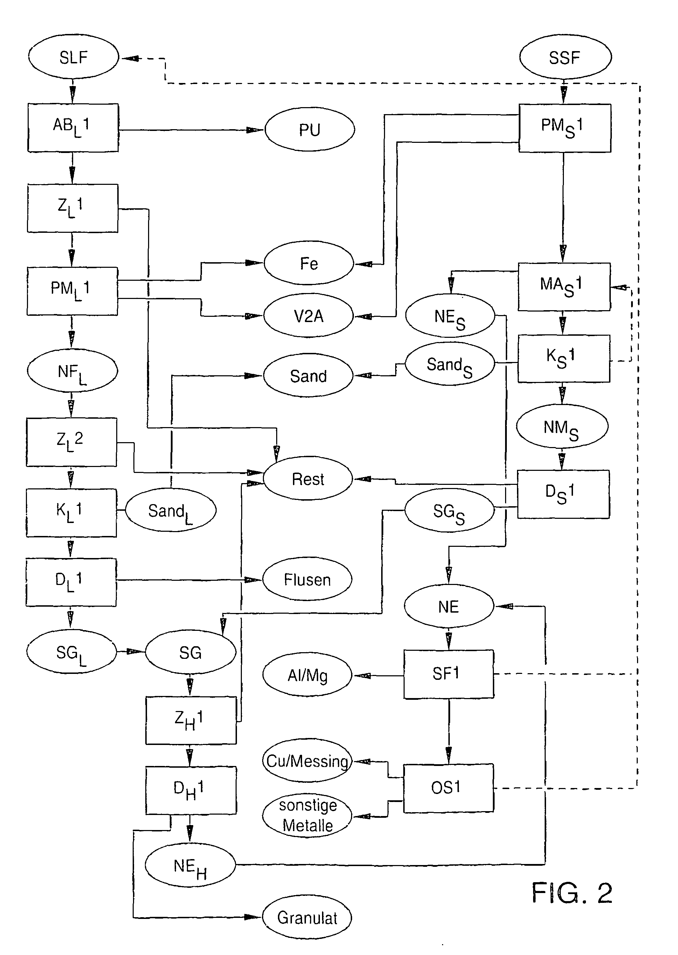

In der Figur 2 sind schematisch wesentliche Komponenten der Anlage zur Aufbereitung der Shredder-Rückstände und die jeweils während der Verfahrensführung an diesen Komponenten anfallenden Zwischen- oder Endprodukte in einem Fließdiagramm dargestellt. Der Übersicht wegen sind die während des Verfahrens erzeugten Endprodukte mittig angeordnet. Der Vorprozess Vor_{L} zur Aufbereitung der Shredder-Leichtfraktion SLF ist schematisch auf der linken, der Vorprozess Vorₛ zur Aufbereitung der Shredder-Schwerfraktion SSF auf der rechten und der Hauptprozess SR_{H} mittig im unteren Teil der Zeichnung dargestellt.

Die Shredder-Schwerfraktion SSF wird zunächst einer zweistufigen Fe- und V2A-Separation mittels eines Permanent-Magnetscheiders PM_{S}1 unterzogen. Nach der Fe- und V2A-Abscheidung erfolgt eine Klassierung des Reststromes und eine Abscheidung Nicht-Eisenmetall-haltiger Fraktionen NE_{S}. Dies kann beispielsweise derart erfolgen, dass zunächst eine Klassierung in verschiedene Fraktionen, beispielsweise größer und kleiner 20 mm, erfolgt und diese Fraktion jeweils separat dem Metallabscheider MA_{S}1 zugeführt werden. Denkbar sind selbstverständlich noch zusätzliche Klassierungsstufen. Im Vordergrund steht dabei eine möglichst saubere stoffliche Trennung in die Nicht-Eisenmetall-haltigen Fraktionen NE_{S} und die verbleibenden metallarmen Fraktionen NM_{S}. Die Klassiereinrichtung K_{S}1 sieht ferner vor, dass metallarme Fraktionen NM_{S} mit einem Komdurchmesser vorzugsweise < 6 mm als eine Sand-Fraktion Sand_{S} abgetrennt werden.

Die verbleibende grobkörnige metallarme Fraktion NM_{S} wird anschließend mit einer Dichtetrennungseinrichtung D_{S}1 in eine Schwergut-Fraktion SG_{S} sowie eine hochdichte Restfraktion Rest aufgetrennt. Damit soll verhindert werden, dass bei der Weiterbehandlung der Schwergut-Fraktion SG_{S} in nachgeschalteten Zerkleinerungsaggregaten noch hochabrasive und scharfkantige Materialien, wie zum Beispiel Edelstahlkugeln, im Mahlraum vorhanden sind. Zusätzlich kann an dieser Stelle nochmals ein Metallabscheider installiert werden, um letzte verschleißfördernde, massive Metallverunreinigungen abzutrennen. Zusammenfassend liefert der Vorprozess Vorₛ demnach eine Eisen-Fraktion Fe, eine Stahl-Fraktion V2A, eine Nicht-Eisenmetall-haltige Fraktion NE_{S}, eine Sand-Fraktion Sandₛ und eine Schwergut-Fraktion SG_{S}.

Im Vorprozess Vor_{L} wird ausgehend von der Shredder-Leichtfraktion SLF zunächst eine Schaumstoff-Fraktion PU - überwiegend aus dem leicht-flugfähigen Polyurethan bestehend - in der Absaugeinrichtung AB_{L}1 abgetrennt. Die abgetrennten Schaumstoffstücke werden pneumatisch in einen Presscontainer gefördert und dort automatisch verdichtet. Diese Fraktion kann direkt verwertet oder gegebenenfalls einer weiteren, hier nicht weiter ausgeführten Veredelungsstufe zugeführt werden.

Die verbleibende Fraktion wird nun in einem ersten Zerkleinerungsaggregat Z_{L}1 aufgeschlossen, und zwar derart, dass ein Austrag des Aggregats Z_{L}1 Partikel mit einem Durchmesser < 50 mm enthält. Um eine Beanspruchung des Zerkleinerungsaggregats Z_{L}1 möglichst gering zu halten, kann vorgesehen sein, dass eine hier nicht dargestellte Klassiereinrichtung zur Separation und Zuführung einer Fraktion mit einem Durchmesser von > 50 mm vorgeschaltet wird. Von der zerkleinerten Fraktion wird mittels eines Permanent-Magnetscheiders PM_{L}1 eine Eisenfraktion Fe und eine Stahlfraktion V2A abgetrennt. Die verbleibende nicht-ferromagnetische Fraktion NF_{L} wird nun einem zweiten Zerkleinerungsaggregat Z_{L}2 zugeführt, in dem ein weiterer Aufschluss des Materials erfolgt. Ein Austrag des Zerkleinerungsaggregates Z_{L}2 wird dabei mit < 10 mm ausgelegt. Auch hier kann über eine nicht dargestellte Klassiereinrichtung die Beschickung des Zerkleinerungsaggregates Z_{L}2 auf eine Fraktion mit einem Durchmesser > 10 mm beschränkt werden.

Von der nun gut aufgeschlossenen nicht-ferromagnetischen Fraktion NF_{L} wird in einer weiteren Klassiereinrichtung K_{L}1 eine feinkörnige Sand-Fraktion Sand_{L} abgetrennt. Eine Korngröße der Sand-Fraktion Sand_{L} wird vorzugsweise auf < 4 mm festgelegt. Die verbleibende Fraktion wird einer Windsichtung und Dichtetrennung in einer entsprechenden Einrichtung D_{L}1 unterzogen. In der Einrichtung D_{L}1 wird eine leichte Fraktion aus Flusen mittels Querstromsichter über eine Schwergutklappe geblasen. Aufgrund der vorherigen Förderung auf einem Vibrationsförderer hat sich das schwerere Material bereits nach unten abgesetzt, so dass die unterliegende Schwerfraktion zwangsläufig nach unten in ein Schwergutaustrag fällt (Schwergut-Fraktion SG_{L}). Zusammengefasst können in dem Vorprozess Vor_{L} die End- und Zwischenprodukte Schaumstoffstücke PU; Eisen Fe, Stahl V2A, Sand_{L} und Schwergut SG_{L} bereitgestellt werden. Die während der Bearbeitung in den Zerkleinerungsaggregaten Z_{L}1 und Z_{L}2 anfallenden schwermetall- und organikhaltigen Stäube und Schlämme werden der Restfraktion Rest zugeführt.

Im Hauptprozess SR_{H} werden zunächst die Sand-Fraktionen Sand_{L}, Sandₛ zu einer gemeinsamen Sand-Fraktion Sand zusammengefasst. Gegebenenfalls kann diese Fraktion einer weiteren, hier nicht dargestellten Veredelungsstufe zugeführt werden.

Auch die Schwergut-Fraktionen SG_{L} und SG_{S} werden zu einer gemeinsamen Schwergut-Fraktion SG zusammengefasst. Diese wird nachfolgend in einem weiteren Zerkleinerungsaggregat Z_{H}1 erneut aufgeschlossen. Ein Austrag der Zerkleinerungsaggregate Z_{H}1 wird mit < 8 mm ausgelegt. Das Zerkleinerungsaggregat Z_{H}1 ist üblicherweise als Schneidmühle ausgebildet, damit an dieser Stelle ein optimaler Materialaufschluss erreicht wird. Nach der Zerkleinerung erfolgt eine Dichtetrennung auf Luft-Setz-Tischen (Dichtetrennungseinrichtung D_{H}1). Die abgetrennte Leichtfraktion besteht überwiegend aus Kunststoff in granulierter Form. Das Granulat kann gegebenenfalls in einem - hier nicht dargestellten - zusätzlichen Veredelungsprozess in weitere verwertbare Endprodukte aufgetrennt werden. Die verbleibende Schwerfraktion NE_{H} besteht größtenteils aus Nicht-Eisenmetallen, und zwar überwiegend aus KupferLitzen. Die Fraktion NE_{H} kann daher bereits an dieser Stelle dem Prozess entzogen werden, aber auch mit der Nicht-Eisenmetall-haltigen Fraktion NE_{S} zu einer gemeinsamen Fraktion NE zusammengeführt und gemeinsam aufbereitet werden.

Die Aufbereitung der Nicht-Eisenmetall-haltigen Fraktion NE kann im Wesentlichen mittels einer Sandflotationsanlage SF1 und eines optischen Sortierers OS1 erfolgen. Mit einer Sandflotation ist es möglich, eine Leichtmetall-Fraktion vorwiegend aus Aluminium und Magnesium von einer Schwermetall-Fraktion trockenmechanisch zu trennen. Anzumerken ist, dass der hier verwendete Sand als Separationsmedium nichts mit der abgetrennten Fraktion "Sand" aus den Shredder-Rückständen zu tun hat. Die Schwermetalle sinken in das Sandbett, während die Leichtmetalle auf dem Sandbett aufschwimmen. Über eine Trennscheide werden ein leichtmetallhaltiger Oberstrom und der mit den Schwermetallen angereicherte Unterstrom getrennt. In einem zur Sandflotation gehörenden Prozessschritt werden die Metallkonzentrate wieder vom Trennmedium Sand getrennt. Die abgetrennte Aluminium- und Magnesium-Fraktion Al/Mg kann gegebenenfalls noch weiter aufgetrennt werden.

Die abgetrennte Schwerfraktion (insbesondere Zink, Kupfer, Messing, Blei sowie eventuell V4A-Stahl) wird durch den optischen Sortierer OS1 in Buntmetalle Kupfer/Messing und sonstige Metalle aufgetrennt. Eventuell hier anfallende nicht-metallische Reste können je nach Menge und Zusammensetzung an geeigneter Stelle, wie beispielsweise hier in den Vorprozess Vor_{L}, eingespeist werden. Zusammengefasst werden im Hauptprozess SR_{H} mit anschließender Nicht-Eisenmetall-Aufbereitung eine Al/Mg-Fraktion, eine Cu/Messing-Fraktion, eine Fraktion mit sonstigen Metallen und eine Granulat-Fraktion bereitgestellt.

### Bezugszeichenliste

- AB_{L}1: Absaugeinrichtung (Abtrennung Schaumstoff-Fraktion)
- Al/Mg: Leichtmetall-Fraktion
- Cu/Messing: Buntmetall-Fraktion
- D_{H}1, D_{L}1, D_{S}1: Dichtetrennungseinrichtungen
- Fe: Eisen-Fraktion
- Flusen: Flusen-Fraktion
- Granulat: Granulat-Fraktion
- K_{L}1, K_{S}1: Klassiereinrichtungen
- MA_{S}1: Metallabscheider
- NE, NE_{H}, NE_{L}, NE_{S}: Nicht-Eisenmetall-haltige Fraktionen
- NF_{L}: nicht-ferromagnetische Fraktion
- NM_{S}: metallarme Fraktion
- OS1: optischer Sortierer
- PM_{L}1, PM_{S}1: Permanent-Magnetscheider
- PU: Schaumstoff-Fraktion
- Rest: Restfraktion
- Sand, Sand_{L}, Sand_{S}: Sand-Fraktionen
- SF1: Sandflotationsanlage
- SG, SG_{L}, SG_{S}: Schwergut-Fraktionen
- SLF: Shredder-Leichtfraktion
- Sonstige Metalle: Fraktion mit sonstigen Metallen
- SR_{H}: Hauptprozess
- SS: Shredder-Schrott
- SSF: Shredder-Schwerfraktion
- V2A: Stahl-Fraktion
- Vor_{L}: Vorprozess für die Shredder-Leichtfraktion
- Vorₛ: Vorprozess für die Shredder-Schwerfraktion
- Z_{L}1, Z_{L}2, Z_{H}1: Zerkleinerungsaggregate

## Patentansprüche

1. Verfahren zur Aufbereitung von Shredder-Rückständen metallhaltiger Abfälle, insbesondere von Fahrzeugkarossen insbesondere Altautos und/oder Unfallfahrzeugen, bei dem die Shredder-Rückstande in eine Shredder-Leichtfraktion (SLF) und eine nicht-ferromagnetische Fraktion (Shredder-Schwerfraktion (SSF)) aufgetrennt vorliegen, **dadurch gekennzeichnet, dass** die Shredder-Leichtfraktion (SLF) und die nicht-ferromagnetische Fraktion (Shredder-Schwerfraktion (SSF)) in eigenen Vorprozessen (Vor_{L}, Vor_{S}) je in weitere Stoffströme aufgetrennt werden, und dass zumindest Teile eines dieser Stoffströme des einen Vorprozesses (Vor_{L}) mit zumindest Teilen eines dieser Stoffströme des anderen Vorprozesses (Vor_{S}) einem gemeinsamen Hauptprozess (SR_{H}) zur weiteren Aufarbeitung zugeführt werden.

2. Verfahren nach Anspruch 1, **dadurch gekennzeichnet, dass** aus dem Hauptprozess (SR_{H}) als Fraktionen mindestens zwei, insbesondere mindestens drei der Fraktionen eisenhaltige Fraktion (Fe, V2A), Nicht-Eisenmetall-haltige Fraktion (NE), Granulat-Fraktion (Granulat), Flusen-Fraktion (Flusen), Sand-Fraktion (Sand) erzeugt werden.

3. Verfahren nach Anspruch 1 oder 2, **dadurch gekennzeichnet, dass** die Shredder-Leichtfraktion (SLF) einer zusätzlichen Vorbehandlung mittels eines Magnetscheiders zur Abtrennung von ferromagnetischen Restfraktionen unterworfen wird.

4. Verfahren nach einem der vorhergehenden Ansprüchen, **dadurch gekennzeichnet, dass** die Shredder-Leichtfraktion (SLF) im Vorprozess (Vor_{L})
- in einem ersten Zerkleinerungsaggregat (Z_{L}1) aufgeschlossen wird,
- anschließend mittels wenigstens eines Magnetscheiders (PM_{L}1) in mindestens eine eisenhaltige, insbesondere ferromagnetische Fraktion (Fe, V2A) und eine nicht-ferromagnetische Fraktion (NF_{L}) aufgetrennt wird.

5. Verfahren nach Anspruch 4, **dadurch gekennzeichnet, dass** von der Shredder-Leichtfraktion (SLF) im Vorprozess (Vor_{L})
- in einem zweiten Zerkleinerungsaggregat (Z_{L}2) die nicht-ferromagnetische Fraktion (NF_{L}) aufgeschlossen wird,
- von dieser Fraktion mittels wenigstens einer Klassiereinrichtung (K_{L}1) eine feinkörnige Sand-Fraktion (Sand_{L}) abgetrennt wird, und vorzugsweise
- die verbleibende Fraktion in wenigstens einer Dichtetrennungseinrichtung (D_{L}1) insbesondere in eine Flusen-Fraktion (Flusen) und/oder eine grobkörnige Schwergut-Fraktion (SG_{L}) aufgetrennt wird.

6. Verfahren nach Anspruch 4 oder 5, **dadurch gekennzeichnet, dass** von der Shredder-Leichtfraktion (SLF) im Vorprozess (Vor_{L}) mittels einer Absaugeinrichtung (AB_{L}1) zusätzlich eine Schaumstoff-Fraktion (PU) abgetrennt wird.

7. Verfahren nach einem der Ansprüche 4 bis 6, **dadurch gekennzeichnet, dass** dem ersten Zerkleinerungsaggregat (Z_{L}1) eine Klassiereinrichtung zur Separation und Zuführung einer Fraktion mit mindestens einem ersten Durchmesser vorzugsweise > 50 mm (Überkom) vorgeschaltet wird und ein Austrag des Zerkleinerungsaggregates (Z_{L}1) mit einem kleineren als dem ersten Durchmesser, vorzugsweise < 50 mm vorgegeben wird.

8. Verfahren nach einem der Ansprüche 5 bis 7, sofern auf Anspruch 5 rückbezogen,
**dadurch gekennzeichnet, dass** dem zweiten Zerkleinerungsaggregat (Z_{L}2) eine Klassiereinrichtung zur Separation und Zuführung einer Fraktion mit mindestens einem zweiten Durchmesser vorzugsweise > 10 mm (Überkom) vorgeschaltet wird und ein Austrag des Zerkleinerungsaggregates (Z_{L}2) mit, einem kleineren als dem zweiten Durchmesser, vorzugsweise < 10 mm vorgegeben wird.

9. Verfahren nach Anspruch 7 oder 8, **dadurch gekennzeichnet, dass** die kleine Fraktion der Klassiereinrichtung an dem jeweiligen Zerkleinerungsaggregat vorbeigeführt und zumindest teilweise wie der jeweilige Austrag weiter behandelt wird.

10. Verfahren nach einem der Ansprüche 5 bis 9, sofern auf Anspruch 5 rückbezogen, **dadurch gekennzeichnet, dass** durch die Klassiereinrichtung (K_{L}1) eine Sand-Fraktion (Sand_{L}) mit einem Durchmesser < 4 mm abgetrennt wird.

11. Verfahren nach einem der vorhergehenden Ansprüche, **dadurch gekennzeichnet, dass** die Shredder-Schwerfraktion (SSF) im Vorprozess (Vor_{S}) durch wenigstens einen Metallabscheider (MA_{S}1) und/oder wenigstens eine Klassiereinrichtung (K_{S}1) in wenigstens zwei, insbesondere alle der Fraktionen eine angereicherte, Nicht-Eisenmetall-haltige Fraktion (NE_{S}), eine Schwergut-Fraktion (SG_{S}), eine feinkörnige, metallarme Sand-Fraktion (Sand_{S}) getrennt wird.

12. Verfahren nach Anspruch 11, **dadurch gekennzeichnet, dass** von der Schwergut-Fraktion (SG_{S}) in wenigstens einer Dichtetrennungseinrichtung (D_{S}1) eine hochdichte Restfraktion (Rest) abgetrennt wird.

13. Verfahren nach Anspruch 11 oder 12, **dadurch gekennzeichnet, dass** durch die Klassiereinrichtung (K_{S}1) eine Sand-Fraktion (Sand_{S}) mit einem Durchmesser < 6 mm abgetrennt wird.

14. Verfahren nach einem der vorhergehenden Ansprüche, **dadurch gekennzeichnet, dass** im Hauptprozess (SR_{H}) die Stoffströme aus den Vorprozessen (Vor_{L} Vor_{S}) derart zusammengeführt werden, dass
- die Sand-Fraktionen (Sand_{L}, Sandₛ) zu einer insbesondere gemeinsamen Sand-Fraktion (Sand) zusammengefasst werden, und/oder
- die Schwergut-Fraktionen (SG_{L}, SG_{S}) zu einer insbesondere gemeinsamen Schwergut-Fraktion (SG) zusammengefasst werden.

15. Verfahren nach Anspruch 14, **dadurch gekennzeichnet, dass** die Schwergut-Fraktion (SG) mittels eines Zerkleinerungsaggregates (Z_{H}1) aufgeschlossen und/oder über eine Dichtetrennungseinrichtung (D_{H}1) insbesondere in eine Granulat-Fraktion (Granulat) und/oder in eine angereicherte, Nicht-Eisenmetall-haltige Fraktion (NE_{H}) aufgetrennt werden.

16. Verfahren nach Anspruch 14 oder 15, **dadurch gekennzeichnet, dass** ein Austrag des Zerkleinerungsaggregates (Z_{H}1) mit < 8 mm vorgegeben wird.

17. Verfahren nach Anspruch 11 und 15, **dadurch gekennzeichnet, dass** die Metall-Fraktionen (NE_{H}, NE_{S}) zu einer insbesondere gemeinsamen Metall-Fraktion (NE) zusammengefasst werden.

18. Verfahren nach Anspruch 17, **dadurch gekennzeichnet, dass** von der Metall-Fraktion (NE) insbesondere in einer Sandflotation eine Leichtmetall-Fraktion (AI/Mg) und/oder eine Schwer-Fraktion abgetrennt wird.

19. Verfahren nach Anspruch 18, **dadurch gekennzeichnet, dass** die Schwer-Fraktion einer optischen Sortierung zur Abtrennung einer Buntmetall-Fraktion (Cu/Messing) und/oder einer sonstigen Metall-Fraktion (sonstige Metalle) unterworfen wird.

20. Verfahren nach Anspruch 18 oder 19, **dadurch gekennzeichnet, dass** eine bei der Abtrennung anfallende nicht-metallische Restfraktion je nach Menge und Zusammensetzung an geeigneten Stellen in den Hauptprozess (SR_{H}) und/oder die Vorprozesse (Vor_{L}, Vorₛ) eingespeist wird.

21. Anlage zur Aufbereitung von Shredder-Rückständen metallhaltiger Abfälle, insbesondere von Fahrzeugkarossen, bestehend aus einer Shredder-Leichtfraktion (SLF) und einer nicht-ferromagnetischen Fraktion (Shredder-Schwerfraktion (SSF)), **dadurch gekennzeichnet, dass** Mittel vorhanden sind, mit denen die während der Aufbereitung der Shredder-Leichtfraktion (SLF) und der Shredder-Schwerfraktion (SSF) in Vorprozessen (Vor_{L}, Vor_{S}) entstehenden primären Stoffströme zumindest in Teilen einem gemeinsamen Hauptprozess (SR_{H}) zur abschließenden Aufarbeitung zugeführt werden,

22. Anlage nach Anspruch 21 oder 22, **dadurch gekennzeichnet, dass** als Endprodukte mindestens eine ferromagnetische Fraktion (Fe/V2A), eine Nicht-Eisenmetall-haltige Fraktion (NE), eine Granulat-Fraktion (Granulat), eine Flusen-Fraktion (Flusen) und eine Sand-Fraktion (Sand) erzeugt werden.

23. Anlage nach einem der Ansprüche 21 oder 22, **dadurch gekennzeichnet, dass** ein Magnetscheider zur Abtrennung von ferromagnetischen Restfraktionen von der Shredder-Leichtfraktion (SLF) vorhanden ist.

24. Anlage nach einem der Ansprüche 21 bis 23, **dadurch gekennzeichnet, dass** zur Aufarbeitung der vorbehandelten Shredder-Leichtfraktion (SLF) im Vorprozess (Vor_{L}) aufeinander folgend
- ein erstes Zerkleinerungsaggregat (Z_{L}1) zum Aufschluss der Shredder-Leichtfraktion (SLF),
- wenigstens ein Magnetscheider (PM_{L}1) zur Abtrennung mindestens einer ferromagnetischen Fraktion (Fe, V2A) von einer nicht-ferromagnetischen Fraktion (NF_{L}),
- ein zweites Zerkleinerungsaggregat (Z_{L}2) zum Aufschluss der nicht-ferromagnetischen Fraktion (NF_{L}),
- wenigstens eine Klassiereinrichtung (K_{L}1) zur Abtrennung einer feinkörnigen Sand-Fraktion (Sand_{L}) und
- wenigstens eine Dichtetrennungseinrichtung (D_{L}1) zur Abtrennung der Flusen-Fraktion (Flusen) von einer grobkörnigen Schwergut-Fraktion (SG_{L}) vorgesehen ist.

25. Anlage nach Anspruch 24, **dadurch gekennzeichnet, dass** zur Aufarbeitung der vorbehandelten Shredder-Leichtfraktion (SLF) im Vorprozess (Vor_{L}) eine Absaugeinrichtung (AB_{L}1) zur Abtrennung einer Schaumstoff-Fraktion (PU) vorgesehen ist.

26. Anlage nach Anspruch 24, **dadurch gekennzeichnet, dass** dem ersten Zerkleinerungsaggregat (Z_{L}1) eine Klassiereinrichtung zur Separation und Zuführung einer Fraktion mit einem Durchmesser vorzugsweise > 50 mm (Überkorn) vorgeschaltet ist und ein Austrag des Zerkleinerungsaggregates (Z_{L}1) auf vorzugsweise < 50 mm festgelegt ist.

27. Anlage nach Anspruch 24, **dadurch gekennzeichnet, dass** dem zweiten Zerkleinerungsaggregat (Z_{L}2) eine Klassiereinrichtung zur Separation und Zuführung einer Fraktion mit einem Durchmesser vorzugsweise > 10 mm (Überkorn) vorgeschaltet ist und ein Austrag des Zerkleinerungsaggregates (Z_{L}2) auf < 10 mm festgelegt ist.

28. Anlage nach einem der Ansprüche 21 bis 27, **dadurch gekennzeichnet, dass** zur Aufarbeitung der Shredder-Schwerfraktion (SSF) im Vorprozess (Vor_{S}) aufeinander folgend ein Metallabscheider (MA_{S}1) und wenigstens eine Klassiereinrichtung (K_{S}1) zur Abtrennung wenigstens einer angereicherten, Nicht-Eisenmetall-haltige Fraktion (NE_{S}), einer Schwergut-Fraktion (SG_{S}) und einer feinkörnigen, metallarmen Sand-Fraktion (Sand_{S}) vorgesehen sind.

29. Anlage nach Anspruch 28, **dadurch gekennzeichnet, dass** wenigstens eine Dichtetrennungseinrichtung (D_{S}1) zu Abtrennung einer hochdichten Restfraktion (Rest) von der Schwergut-Fraktion (SG_{S}) vorgesehen ist.

30. Anlage nach einem der Ansprüche 21 bis 29, **dadurch gekennzeichnet, dass** zur Aufarbeitung die Stoffströme aus den Vorprozessen (Vor_{L}, Vorₛ) im Hauptprozess (SR_{H})
- Mittel zur Zusammenfassung der Sand-Fraktionen (Sand_{L}, Sandₛ) zur gemeinsamen Sand-Fraktion (Sand),
- Mittel zur Zusammenfassung der Schwergut-Fraktionen (SG_{L}, SG_{S}) zur einer gemeinsamen Schwergut-Fraktion (SG),
- ein Zerkleinerungsaggregat (Z_{H}1) zum Aufschluss der Schwergut-Fraktion (SG) und ,
- nachfolgend eine Dichtetrennungseinrichtung (D_{H}1) zur Abtrennung der Granulat-Fraktion (Granulat) und einer angereicherten, Nicht-Eisenmetall-haltigen Fraktion (NE_{H}) von der aufgeschlossenen Schwergut-Fraktion (SG) vorgesehen sind.

31. Anlage nach Anspruch 30, **dadurch gekennzeichnet, dass** Mittel zur Zusammenfassung der Metall-Fraktionen (NE_{H}, NE_{S}) zur einer gemeinsamen Metall-Fraktion (NE) vorgesehen sind.

32. Anlage nach Anspruch 31, **dadurch gekennzeichnet, dass** eine Sandflotationsanlage zur Auftrennung der Metall-Fraktion (NE) in eine Leichtmetall-Fraktion (AI/Mg) und eine Schwer-Fraktion vorhanden ist.

33. Anlage nach Anspruch 32, **dadurch gekennzeichnet, dass** ein optischer Sortierer zur Auftrennung der Schwerfraktion in eine Buntmetall-Fraktion (Cu/Messing) und eine sonstige Metall-Fraktion (sonstige Metalle) vorhanden ist.

34. Anlage nach den Ansprüchen 32 oder 33, **dadurch gekennzeichnet, dass** Mittel zur Einspeisung nicht-metallischer Restfraktionen an geeigneten Stellen in den Hauptprozess (SR_{H}) und/oder die Vorprozesse (Vor_{L}, Vor_{S}) vorgesehen sind.

## Claims

1. Method for reprocessing shredder residues of metal-containing waste, especially vehicle bodies, in particular old cars and/or vehicles which have been involved in an accident, in which the shredder residues are present split into a shredder light fraction (SLF) and a non-ferromagnetic fraction (shredder heavy fraction, (SHF)), **characterized in that** the shredder light fraction (SLF) and the non-ferromagnetic fraction (shredder heavy fraction (SHF)) are separated in each case into further material flows in dedicated preliminary processes (Pre_{L}, Pre_{H}), and **in that** at least parts of one of these material flows of one preliminary process (Pre_{L}) are fed with at least parts of one of these material flows of the other preliminary process (Pre_{H}) to a common main process (SR_{M}) for further processing.

2. Method according to Claim 1, **characterized in that** at least two, in particular at least three of the fractions of iron-containing fraction (Fe, V2A), non-ferrous-metal-containing fraction (NF), granulate fraction (granulate), fluff fraction (fluff) and sand fraction (sand) are produced as fractions from the main process (SR_{M}).

3. Method according to Claim 1 or 2, **characterized in that** the shredder light fraction (SLF) is subjected to an additional pre-treatment by means of a magnetic separator for the separation of ferromagnetic residual fractions.

4. Method according to one of the preceding claims, **characterized in that**, in the preliminary process (Pre_{L}), the shredder light fraction (SLF)
- is broken up in a first crushing unit (CR_{L}1), and
- is subsequently split by means of at least one magnet separator (MS_{L}1) into at least one iron-containing, in particular ferromagnetic fraction (Fe, V2A) and one non-ferromagnetic fraction (NF_{L}).

5. Method according to Claim 4, **characterized in that**, in the preliminary process (Pre_{L}),
- the non-ferromagnetic fraction (NF_{L}) is broken up from the shredder light fraction (SLF) in a second crushing unit (CR_{L}2),
- a fine-grained sand fraction (sand_{L}) is separated from this fraction by means of at least one classification device (CD_{L}1), and
- the remaining fraction is preferably split, in at least one density separation device (DS_{L}1), in particular into a fluff fraction (fluff) and/or a coarse-grained heavy material fraction (HM_{L}).

6. Method according to Claim 4 or 5, **characterized in that** from the shredder light fraction (SLF), in the preliminary process (Pre_{L}), a foamed plastic fraction (PU) is separated by means of a suction device (SU_{L}1).

7. Method according to one of Claims 4 to 6, **characterized in that** a classification device for separating and feeding a fraction with at least one first diameter of preferably > 50 mm (oversize) is connected ahead of the first crushing unit (CR_{L}1), and an output of the crushing unit (CR_{L}1) is predefined at a smaller diameter than the first diameter, preferably < 50 mm.

8. Method according to one of Claims 5 to 7, in so far as they refer back to Claim 5, **characterized in that** a classification device for separating and feeding a fraction with at least one second diameter of preferably > 10 mm (oversize) is connected ahead of the second crushing unit (CR_{L}2), and an output of the crushing unit (CR_{L}2) is predefined at a smaller diameter than the second diameter, preferably < 10 mm.

9. Method according to Claim 7 or 8, **characterized in that** the small fraction of the classification device is guided past the respective crushing unit and treated further at least partially as the respective output.

10. Method according to one of Claims 5 to 9, in so far as they refer back to Claim 5, **characterized in that** a sand fraction (sand_{L}) with a diameter of < 4 mm is separated by the classification device (CD_{L}1).

11. Method according to one of the preceding claims, **characterized in that** the shredder heavy fraction (SHF) is,divided into at least two, in particular all of the fractions of an enriched, non-ferrous-metal-containing fraction (NF_{S}), a heavy material fraction (HM_{H}), and a fine-grained, low-metal sand fraction (sand_{H}) in the preliminary process (Pre_{H}) by at least one metal separator (MS_{H}1) and/or at least one classification device (CD_{H}1).

12. Method according to Claim 11, **characterized in that** a highly dense residual fraction (residual) is separated from the heavy material fraction (HM_{H}). in at least one density separation device (DS_{H}1).

13. Method according to Claim 11 or 12, **characterized in that** a sand fraction (sand_{H}) with a diameter of < 6 mm is separated by the classification device (CD_{H}1) .

14. Method according to one of the preceding claims, **characterized in that** the material flows from the preliminary processes (Pre_{L}, Pre_{H}) are combined in the main process (SR_{M}) in such a way that
- the sand fractions (sand_{L}, sand_{H}) are combined to form an, in particular, common sand fraction (sand), and/or
- the heavy material fractions (HM_{L}, HM_{H}) are combined to form an, in particular, heavy material fraction (HM).

15. Method according to Claim 14, **characterized in that** the heavy material fraction (HM) is disintegrated by means of a crushing unit (CR_{M}1) and/or is split by a density separator (DS_{H}1) in particular into a granulate fraction (granulate) and/or into an enriched, non-ferrous-metal-containing fraction (NF_{M}).

16. Method according to Claim 14 or 15, **characterized in that** an output of the crushing unit (CR_{M}1) is predefined at < 8 mm.

17. Method according to Claims 11. and 15, **characterized in that** the metal fractions (NF_{M}, NF_{H}) are combined to form an, in particular, common metal fraction (NE).

18. Method according to Claim 17, **characterized in that** a lightweight metal fraction (Al/Mg) and/or a heavy fraction are/is separated from the metal fraction (NF), in particular in a sand flotation process.

19. Method according to Claim 18, **characterized in that** the heavy fraction is subjected to visual sorting in order to separate a non-ferrous metal fraction (Cu/brass) and/or another metal fraction (other metals).

20. Method according to Claim 18 or 19, **characterized in that** a non-metallic residual fraction which accumulates during the separation is fed into the main process (SR_{M}) and/or the preliminary processes (Pre_{L}, Pre_{H}) at suitable locations, depending on the amount and composition.

21. Plant for reprocessing shredder residues of metal-containing waste, especially vehicle bodies, consisting of a shredder light fraction (SLF) and a non-ferromagnetic fraction (shredder heavy fraction (SHF)), **characterized in that** means are present with which the primary material flows formed during the reprocessing of the shredder light fraction (SLF) and of the shredder heavy fraction (SHF) in preliminary processes (Pre_{L}, Pre_{H}) are fed at least in parts to a common main process (SR_{M}) for final reprocessing.

22. Plant according to Claim 21 or 22, **characterized in that** at least one ferromagnetic fraction (Fe/V2A), one non-ferrous-metal-containing fraction (NF), one granulate fraction (granulate), one fluff fraction (fluff) and one sand fraction (sand) are produced as final products.

23. Plant according to one of Claims. 21, or 22, **characterized in that** a magnetic separator for separating ferromagnetic residual fractions from the shredder light fraction (SLF) is present.

24. Plant according to one of Claims 21 to 23, **characterized in that** for the reprocessing of the pretreated shredder light fraction (SLF) in the preliminary process (Pre_{L}) there is successively provided
- a first crushing unit (CR_{L}1) for the disintegration of the shredder light fraction (SLF),
- at least one magnetic separator (PM_{L}1) for separating at least one ferromagnetic fraction (Fe, V2A) from a non-ferromagnetic fraction (NF_{L}),
- a second crushing unit (CR_{L}2) for disintegrating the non-ferromagnetic fraction (NF_{L}),
- at least one classifier (CL_{L}1) for the separation of a fine-grained sand fraction (Sand_{L}), and
- at least one density separator (DS_{L}1) for separating the fluff fraction (fluff) from a coarse-grained heavy material fraction (HM_{L}).

25. Plant according to Claim 24, **characterized in that**, for the reprocessing of the pretreated shredder light fraction (SLF) in the preliminary process (Pre_{L}), a suction device (SU_{L}1) for the separation of a foamed plastic fraction (PU) is provided.

26. Plant according to Claim 24, **characterized in that** a classification device for separating and feeding a fraction with a diameter of preferably > 50 mm (oversize) is connected ahead of the first crushing unit (CR_{L}1), and an output of the crushing unit (CR_{L}1) is fixed at preferably < 50 mm.

27. Plant according to Claim 24, **characterized in that** a classification device for separating and feeding a fraction with a diameter of preferably > 10 mm (oversize) is connected ahead of the second crushing unit (CR_{L}2), and an output of the crushing unit (CR_{L}2) is fixed at < 10 mm.

28. Plant according to one of Claims 21 to 27, **characterized in that** for the reprocessing of the shredder heavy fraction (SHF) in the preliminary process (Pre_{H}) there are successively provided a metal separator (MS_{H}1) and at least one classifier (CL_{H}1) for the separation of at least one enriched, non-ferrous-metal-containing fraction (NF_{H}), a heavy material fraction (HM_{H}) and a fine-grained, low-metal sand fraction (Sand_{H}).

29. Plant according to Claim 28, **characterized in that** at least one density separation device (DS_{H}1) is provided for separating a highly dense residual fraction (residual) from the heavy material fraction (HM_{H}).

30. Plant according to one of Claims 21 to 29, **characterized in that** for the reprocessing of the material flows from the preliminary processes (Pre_{L}, Pre_{H}) in the main process (SR_{M}) there are provided
- means for combining the sand fractions (Sand_{L}, Sand_{H}) into the common crude sand fraction (Sand),
- means for combining the heavy material fractions (HM_{L}, HM_{H}) into a common heavy material fraction (HM),
- a crushing unit (CR_{M}1) for the disintegration of the heavy material fraction (HM), and
- subsequently a density separator (DS_{M}1) for separating the granulate' fraction (granulate) and an enriched, non-ferrous-metal-containing fraction (NF_{H}) from the disintegrated heavy material fraction (HM).

31. Plant according to Claim 30, **characterized in that** means are provided for combining the metal fractions (NF_{M}, NF_{H}) to form a common metal fraction (NF).

32. Plant according to Claim 31, **characterized in that** there is a sand flotation plant for splitting the metal fraction (NF) into a lightweight metal fraction (Al/Mg) and a,heavy fraction.

33. Plant according to Claim 32, **characterized in that** there is a visual sorter for splitting the heavy fraction into a non-ferrous metal fraction (Cu/brass) and another metal fraction (other metals).

34. Plant according to Claim 32 or 33, **characterized in that** means are provided for feeding non-metallic residual fractions into the main process (SR_{M}) and/or the preliminary processes (Pre_{L}, Pre_{H}) at suitable locations.

## Revendications

1. Procédé de préparation de résidus de déchiquetage de déchets qui contiennent des métaux et en particulier les carrosseries de véhicule, notamment de vieilles automobiles et/ou d'automobiles accidentées, dans lequel les résidus de déchiquetage se présentent sous forme séparée en une fraction légère de déchiquetage (SLF) et une fraction non ferromagnétique (fraction lourde de déchiquetage (SSF)), **caractérisé en ce que** : la fraction légère de déchiquetage (SLF) et la fraction non ferromagnétique (fraction lourde de déchiquetage (SSF)) sont séparées dans des opérations préalables propres (Vor_{L}, Vor_{S}) en écoulements partiels subséquents et **en ce qu'**au moins des parties de l'un de ces écoulements partiels d'une opération préalable (Vor_{L}) sont acheminées avec au moins des parties de l'un de ces écoulements parties de l'autre opération préalable (Vor_{S}) à une opération principale commune (SR_{H}) en vue de leur traitement ultérieur.

2. Procédé selon la revendication 1, **caractérisé en ce que** l'on produit à partir de l'opération principale (SR_{H}) sous forme de fractions, au moins deux, en particulier au moins trois parmi une fraction contenant du fer (Fe, V2A), une fraction (NE) qui contient des métaux non-ferreux, une fraction de granulés (granulés), une fraction de peluches (peluches) et une fraction de sable (sable).

3. Procédé selon la revendication 1 ou 2, **caractérisé en ce que** la fraction légère de déchiquetage (SLF) subit un pré-traitement supplémentaire au moyen d'un séparateur magnétique en vue de séparer les fractions ferromagnétiques résiduelles.

4. Procédé selon l'une quelconque des revendications précédentes, **caractérisé en ce que** la fraction légère de déchiquetage (SLF) dans l'opération préalable (Vor_{L}),
- est décortiquée dans une première machine de déchiquetage (Z_{L}1),
- et ensuite, est séparée au moyen d'au moins un séparateur magnétique (PM_{L}1) en au moins une fraction contenant du fer, notamment ferromagnétique (Fe, V2A) et une fraction non ferromagnétique (NF_{L}).

5. Procédé selon la revendication 4, **caractérisé en ce qu'**à partir de la fraction légère de déchiquetage (SLF) dans l'opération préalable (Vor_{L}),
- la fraction non ferromagnétique (NF_{L}) est décortiquée dans une deuxième machine de déchiquetage (Z_{L}2),
- à partir de cette fraction, une fraction de sable fin (sable_{L}) est séparée au moyen d'au moins un dispositif de classification (K_{L}1) et de préférence,
- la fraction résiduelle est séparée dans au moins un dispositif (D_{L}1) de séparation en fonction de la masse spécifique, notamment en une fraction de peluches (peluches) et une fraction (SG_{L}) de produits lourds à grains grossiers.

6. Procédé selon la revendication 4 ou 5, **caractérisé en ce qu'**à partir de la fraction légère de déchiquetage (SLF) dans l'opération préalable (Vor_{L}), on sépare de plus une fraction de mousse (PU) au moyen d'un dispositif d'aspiration (AB_{L}1).

7. Procédé selon l'une quelconque des revendications 4 à 6, **caractérisé en ce que** l'on monte avant la première machine de déchiquetage (Z_{L}1) un dispositif de classification pour séparer et acheminer une fraction ayant au moins un premier diamètre de préférence > 50 mm (grains trop gros) et l'on prévoit une décharge de la machine de déchiquetage (Z_{L}1) avec un diamètre inférieur au premier diamètre, de préférence < 50 mm.

8. Procédé selon l'une quelconque des revendications 5 à 7, dans la mesure où elles se rapportent à la revendication 5, **caractérisé en ce que** l'on monte avant la deuxième machine de déchiquetage (Z_{L}2) un dispositif de classification pour séparer et acheminer une fraction ayant au moins un premier diamètre de préférence > 10 mm (grains trop gros) et l'on prévoit une décharge de la machine de déchiquetage (Z_{L}2) avec un diamètre inférieur au premier diamètre, de préférence < 10 mm.

9. Procédé selon la revendication 7 ou 8, **caractérisé en ce que** la petite fraction du dispositif de classification est amenée devant la machine de déchiquetage respective et est au moins en partie traitée ultérieurement comme la décharge respective.

10. Procédé selon l'une quelconque des revendications 5 à 9, dans la mesure où elles se rapportent à la revendication 5, **caractérisé en ce que** le dispositif de classification (K_{L}1) permet de séparer une fraction de sable fin (sable_{L}) de diamètre < 4 mm.

11. Procédé selon l'une quelconque des revendications précédentes, **caractérisé en ce que** la fraction lourde de déchiquetage (SSF) dans l'opération préalable (Vor_{S}) est séparée par au moins un séparateur de métaux (MA_{S}1) et/ou au moins un dispositif de classification (K_{S}1) en au moins deux, notamment en toutes les fractions constituées par une fraction (NF_{S}) qui est enrichie en métaux non ferreux, une fraction (SG_{S}) de produits lourds et une fraction de sable fin appauvri en métaux (sables).

12. Procédé selon la revendication 11, **caractérisé en ce que** l'on sépare de la fraction (SG_{S}) de produits lourds dans au moins un dispositif de séparation en fonction de la densité (D_{S}1), une fraction résiduelle à haute masse spécifique (rest).

13. Procédé selon la revendication 11 ou 12, **caractérisé en ce que** l'on sépare avec le dispositif de classification (K_{S}1) une fraction de sable (sables) de diamètre < 6 mm.

14. Procédé selon l'une quelconque des revendications précédentes, **caractérisé en ce que** dans l'opération principale (SR_{H}), les écoulements de matières provenant des opérations préalables (Vor_{L}, Vor_{S}) sont rassemblés de telle sorte que
- les fractions de sable (sable_{L}, sables) sont rassemblées en une fraction commune de sable (sable), et/ou
- les fractions (SG_{L}, SG_{S}) de produits lourds sont rassemblées en une fraction commune (SG) de produits lourds.

15. Procédé selon la revendication 14, **caractérisé en ce que** la fraction de produits lourds (SG) est désagrégée au moyen d'une machine de déchiquetage (Z_{H}1) et/ou est séparée au moyen d'un dispositif (D_{H}1) de séparation en fonction de la masse spécifique en particulier en une fraction de granulés (granulés) et/ou en une fraction enrichie en métaux non ferreux (NF_{H}).

16. Procédé selon la revendication 14 ou 15, **caractérisé en ce qu'**une décharge de la machine de déchiquetage (Z_{H}1) est prédéfinie de manière à être < 8 mm.

17. Procédé selon les revendications 11 et 15, **caractérisé en ce que** les fractions (NF_{H}, NF_{S}) qui contiennent des métaux sont rassemblées notamment en une fraction métallifère commune (NF).

18. Procédé selon la revendication 17, **caractérisé en ce que** la fraction métallifère (NF) est séparée notamment dans une flottation de sable en une fraction de métaux légers (Al/Mg) et/ou une fraction lourde.

19. Procédé selon la revendication 18, **caractérisé en ce que** la fraction lourde est soumise à un tri optique pour séparer une fraction de métaux non ferreux (Cu/laiton) et/ou une autre fraction métallique (autres métaux).

20. Procédé selon la revendication 18 ou 19, **caractérisé en ce qu'**une fraction résiduelle non métallique se formant lors de la séparation est intégrée en fonction de sa quantité et de sa composition en des endroits appropriés dans l'opération principale (SR_{H}) et/ou dans les opérations préalables (Vor_{L}, Vor_{S}).

21. Installation de traitement de résidus de déchiquetage de déchets qui contiennent des métaux, en particulier de carrosseries de véhicule, constitués d'une fraction légère de déchiquetage (SLF) et d'une fraction non ferromagnétique (fraction lourde de déchiquetage (SSF)), **caractérisée en ce qu'**elle présente des moyens avec lesquels les écoulements de matière primaires qui sont produits pendant la préparation de la fraction légère de déchiquetage (SLF) et de la fraction lourde de déchiquetage (SSF) dans des opérations préalables (Vor_{L}, Vor_{S}) sont acheminés au moins en parties à une opération principale commune (SR_{H}) en vue du traitement subséquent.

22. Installation selon la revendication 21 ou 22, **caractérisée en ce que** l'on produit en tant que produits finaux au moins une fraction ferromagnétique (Fe/V2A), une fraction (NF) qui contient des métaux non ferreux, une fraction de granulés (granulés), une fraction de peluches (peluches) et une fraction de sable (sable).

23. Installation selon l'une quelconque des revendications 21 ou 22, **caractérisée en ce qu'**un séparateur magnétique est prévu pour séparer des fractions résiduelles ferromagnétiques de la fraction légère de déchiquetage (SLF).

24. Installation selon l'une quelconque des revendications 21 à 23, **caractérisé en ce que** pour le traitement de la fraction légère de déchiquetage (SLF) prétraitée au cours de l'opération préalable (Vor_{L}), on prévoit successivement:
- une première machine de déchiquetage (Z_{L}1) qui décortique la fraction légère de déchiquetage (SLF),
- au moins un séparateur magnétique (PM_{L}1) qui sépare au moins une fraction ferromagnétique (Fe, V2A) d'une fraction non ferromagnétique (NF_{L}),
- une deuxième machine de déchiquetage (Z_{L}2) qui décortique la fraction non ferromagnétique (NF_{L}),
- au moins un dispositif de classification (K_{L}1) qui sépare une fraction de sable fin (sable_{L}) et
- au moins un dispositif (D_{L}1) de séparation en fonction de la masse spécifique qui sépare la fraction de peluches (peluches) d'une fraction (SG_{L}) de produits lourds à grains grossiers.

25. Installation selon la revendication 24, **caractérisée en ce que** pour la préparation de la fraction légère de déchiquetage (SLF) prétraitée dans l'opération préalable (Vor_{L}), on prévoit un dispositif d'aspiration (AB_{L}1) qui sépare une fraction de mousse (PU).

26. Installation selon la revendication 24, **caractérisée en ce que** l'on monte avant la première machine de déchiquetage (Z_{L}1) un dispositif de classification pour séparer et acheminer une fraction ayant un diamètre de préférence > 50 mm (grains trop gros) et l'on prévoit une décharge de la machine de déchiquetage (Z_{L}1) avec un diamètre de préférence < 50 mm.

27. Installation selon la revendication 24, **caractérisée en ce que** l'on monte avant la deuxième machine de déchiquetage (Z_{L}2) un dispositif de classification pour séparer et acheminer une fraction ayant un diamètre de préférence > 10 mm (grains trop gros) et l'on prévoit une décharge de la machine de déchiquetage (Z_{L}2), avec un diamètre de préférence < 10 mm.

28. Installation selon l'une des revendications 25 à 27, **caractérisée en ce que** pour traiter la fraction lourde de déchiquetage (SSF) dans l'opération préalable (Vor_{S}), on prévoit successivement un séparateur de métaux (MA_{S}1) et au moins un dispositif de classification (K_{S}1) qui séparent au moins une fraction (NF_{S}) qui est enrichie en métaux non ferreux, une. fraction (SG_{S}) de produits lourds et une fraction de sable fin appauvri en métaux (sables).

29. Installation selon la revendication 28, **caractérisée en ce que** l'on prévoit au moins un dispositif de séparation en fonction de la densité (D_{S}1), pour séparer une fraction résiduelle à haute masse spécifique (rest) de la fraction (SG_{S}) de produits lourds.

30. Installation selon l'une des revendications 21 à 29, **caractérisée en ce que** pour traiter les écoulements de matière qui proviennent des opérations préalables (Vor_{L}, Vor_{S}), on prévoit dans l'opération principale (SR_{H}) :
- des moyens qui rassemblent les fractions de sable (sable_{L}, sables) en une fraction commune de sable (sable),
- des moyens qui rassemblent les fractions (SG_{L}, SG_{S}) de produits lourds en une fraction commune (SG) de produits lourds,
- une machine de déchiquetage (Z_{H}1) qui décortique la fraction (SG) de produits lourds et ensuite
- un dispositif (D_{H}1) de séparation en fonction de la masse spécifique qui sépare la fraction des granulés (granulés) et une fraction (NF_{H}) enrichie en métaux non ferreux de la fraction décortiquée (SG) de produits lourds.

31. Installation selon la revendication 30,
**caractérisée en ce que** l'on prévoit des moyens qui rassemblent les fractions (NF_{H}, NF_{S}) qui contiennent des métaux en une fraction métallifère commune (NF) .

32. Installation selon la revendication 31, **caractérisée en ce que** l'on prévoit une installation de flottation de sable pour séparer la fraction (NF) contenant des métaux en une fraction de métaux légers (Al/Mg) et une fraction lourde.

33. Installation selon la revendication 32, **caractérisée en ce que** l'on prévoit un dispositif de tri optique pour séparer la fraction lourde en une fraction de métaux non ferreux (Cu/laiton) et une autre fraction métallique (autres métaux).

34. Installation selon l'une quelconque des revendications 32 ou 33, **caractérisée en ce que** l'on prévoit des moyens pour intégrer des fractions résiduelles non métalliques en des endroits appropriés dans l'opération principale (SR_{H}) et/ou dans les opérations préalables (Vor_{L}, Vor_{S}).
